# EUROPEAN PATENT APPLICATION

(11) **EP 4 663 491 A2**
(43) Date of publication of application: **17.12.2025**
(21) Application number: 25181832.4
(22) Date of filing: 10.06.2025
(51) Int. Cl.: B60T 13/66, B60T 17/22

(54) **VERIFICATION SYSTEMS OF THE OPERATION OF A BRAKING SYSTEM FOR A VEHICLE, PRESSURE MEASUREMENT SYSTEM FOR A BRAKING SYSTEM OF A VEHICLE AND VEHICLES**

(30) Priority: 10.06.2024 IT 202400013135
(71) Applicant: Faiveley Transport Italia S.p.A., 10045 Piossasco (TO) (IT)
(72) Inventor: FREA, Matteo, I-10060 CANTALUPA (Torino) (IT); COTZA, Michele, I-10139 TORINO (IT)
(74) Representative: Cristinelli, Luca

(57) **Abstract**

A verification system (100) of the operation of a braking system for a vehicle is described. The braking system comprises a brake pipe (104) arranged to convey a fluid, a brake cylinder (106) arranged to contain at least part of the fluid, adjustment means (108) arranged to adjust the pressure value of the fluid in the brake cylinder (106) as a function of the pressure value of the fluid conveyed in the brake pipe (104) and of a predetermined relation pattern, and braking means (110) arranged to apply a braking force, the intensity of which is a function of the pressure value of the fluid in the brake cylinder (106). The verification system comprises at least one rotary electric generator (112) arranged to be coupled to at least one axle (A) and comprising first electronic processing means (114) arranged to determine a pressure value of the fluid conveyed in the brake pipe (104) and the pressure value of the fluid in the brake cylinder (106), and to determine that the braking system is damaged or malfunctioning when the relation between the determined pressure value of the fluid conveyed in the brake pipe (104) and the determined pressure value of the fluid in the brake cylinder (106) is not within the predetermined relation pattern.

Further verification systems, measurement systems, and a vehicle are also described.

## Description

### Field of the invention

The present invention generally belongs to the field of vehicles; in particular, the invention relates to verification systems of the operation of a braking system for a vehicle, to a pressure measurement system for a braking system of a vehicle and to vehicles.

### Prior art

In typical solutions of the known art, vehicles, for example for freight transport, did not comprise onboard electronic solutions as such vehicles were not provided with at least one power supply system.

Such vehicles were mainly provided only with pneumatic systems, for example pneumatic braking systems.

In the field, there was clearly the need to equip such vehicles with electronic means in order to be able, for example, to monitor the correct operation of such onboard pneumatic systems of the vehicle.

However, such electronic means require electric power for their operation.

Recently, in order to make a power supply source available also in such vehicles not provided with electric power supply systems, the use of rotary electric generators has been provided for the generation/recovery of electric power from the rotary motion of a wheel and/or of an axle. The use of such rotary electric generators for determining the angular speed of a wheel of the vehicle is also nowadays known.

In general, a rotary electric generator is a device arranged to be coupled to an axle of at least one vehicle to which at least one wheel is coupled (in the context of vehicles, the rotary electric generator is also known as "axle generators"). Exemplarily, the rotary electric generator may be coupled to the axle so that the rotation of the axle is transmitted to a rotor of the rotary electric generator.

For example, in the railway field, two wheels may be coupled to an axle, i.e., a first wheel at a first end of the axle and a second wheel at a second end of the axle.

An example of a rotary electric generator usable on a vehicle is illustrated for example in patent IT201600111758, which discloses a device, preferably of the bearing-cap type, self-powered for logistic/diagnostic monitoring for vehicles, in particular for freight-type railway vehicles. Said device may for example have inside it a temperature sensor and/or an acceleration sensor and/or a wireless transmission system and/or an infomobility system and/or an autonomous electric generator for the electric power supply of all the aforesaid systems and/or sensors.

Disadvantageously, the described solution does not allow and does not contemplate in any way the need to monitor the operation of pneumatic systems of the vehicle.

### Summary of the invention

An object of the present invention is therefore to provide solutions, usable also on vehicles not provided with electric power supply systems, which allow monitoring the operation of pneumatic systems onboard such vehicles.

The aforesaid and other objects and advantages are achieved:
- according to a first aspect of the invention, by a verification system of the operation of a braking system for a vehicle having the features defined in claim 1 or in claim 5;
- according to a second aspect of the invention, by a pressure measurement system for a braking system of a vehicle having the features defined in claim 12;
- according to a third aspect of the invention, by a vehicle having the features defined in claim 17 or in claim 18.

Preferred embodiments of the invention are defined in the dependent claims, the content of which is to be understood as an integral part of the present description.

### Brief description of the Figures

The functional and structural features of some preferred embodiments of verification systems of the operation of a braking system for a vehicle, of a pressure measurement system for a braking system of a vehicle and of vehicles according to the invention will now be described. Reference is made to the accompanying drawings, wherein:
- figure 1 illustrates a first embodiment of a verification system of the operation of a braking system for a vehicle, particularly a railway vehicle;
- figure 2 illustrates a further embodiment applicable to the solution illustrated in figure 1;
- figure 2a illustrates yet another embodiment applicable to the solution illustrated in figure 1;
- figure 3 illustrates a second embodiment of a verification system of the operation of a braking system for a vehicle, particularly a railway vehicle.

### Detailed description

Before explaining in detail a plurality of embodiments of the invention, it should be clarified that the invention is not limited in its application to the constructional details and to the configuration of the components shown in the following description or illustrated in the drawings. The invention is capable of assuming other embodiments and of being implemented or practically made in various ways. It must also be understood that the phraseology and terminology are of descriptive purpose and should not be construed as limiting. The use of "including" and "comprising" and their variations are to be understood as encompassing the elements recited hereinafter and their equivalents, as well as additional elements and their equivalents.

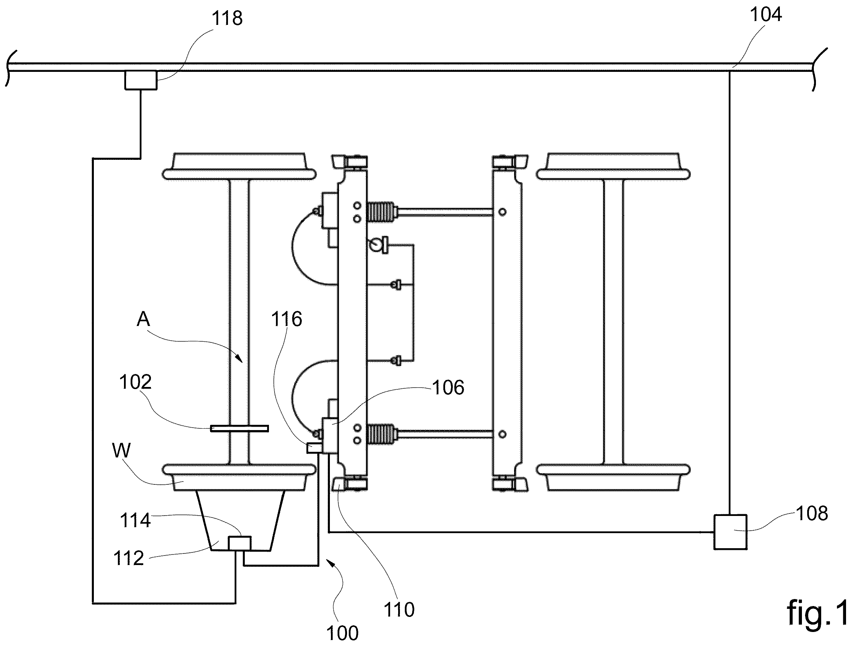

With initial reference to figure 1, a first embodiment of a verification system 100 of the operation of a braking system for a vehicle, particularly a railway vehicle, is described below.

As observable in said figure, the vehicle comprises at least one axle A to which at least one wheel W is coupled and a braking system.

The braking system is arranged to apply a braking force to said wheel W or to said axle A or to a braking organ 102 coupled to said wheel W or to said axle A.

For example, the braking organ 102 may be a disc, associated with said at least one wheel W of the vehicle or associated with said at least one axle A.

Still with reference to figure 1, the braking system comprises:
- at least one brake pipe 104 arranged to convey a fluid;
- a brake cylinder 106 arranged to contain at least a part of said fluid;
- adjustment means 108 arranged for adjusting the pressure value of the fluid in the brake cylinder 106 according to the pressure value of the fluid conveyed in the brake pipe 104 and to a predetermined relation pattern between the pressure value of the fluid conveyed in the brake pipe 104 and the pressure value of the fluid inside the brake cylinder 106;
- braking means 110 arranged to apply said braking force to said at least one wheel W or to said at least one axle A or to said braking organ 102, wherein the intensity of said braking force is a function of the pressure value of the fluid in the brake cylinder 106.

For example, the adjustment means 108 may be a system/device/unit known in the field of vehicles by the name "UIC Distributor".

For example, the predetermined relation pattern between the pressure value of the fluid conveyed in the brake pipe 104 and the pressure value of the fluid inside the brake cylinder 106 may be achieved, for example, by means of a table that relates/univocally relates the pressure values of the fluid conveyed in the brake pipe 104 with respective pressure values of the fluid inside the brake cylinder 106.

In one embodiment, the verification system 100 comprises at least one rotary electric generator 112 arranged to be coupled to said at least one axle A of the vehicle.

A rotary electric generator 112 may, for example, be a radial flux or axial flux generator.

By way of example, a rotary electric generator may comprise a conductive wire wound in a coil and placed in a rotor, i.e., in a system capable of rotating on itself. The coil is placed inside a magnetic field generated by a system called stator.

Unlike the rotor, the stator is a fixed component of the generator.

The rotor may be associated with the axle of the vehicle, so that the rotation of the at least one wheel coupled integrally to the axle is transmitted to the rotor of the generator, so as to generate a rotation of the rotor itself.

The rotation of the coil causes a variation of the magnetic field inside the conductor and, thus, generates electric current in the conductive wire.

In this simple case, it is alternating current because the polarities of the loop continuously rotate.

The intensity produced by the rotary electric generator is alternating, for example, it may vary according to a sinusoidal pattern.

The magnetic field in the loop is null when the plane of the loop is parallel to the magnetic field force lines. The magnetic field in the loop is maximum in the positive (+) or negative (-) polarity when the plane of the loop is perpendicular to the magnetic field force lines.

Returning to the description of the embodiment, the rotary electric generator 112 comprises first electronic processing means 114 arranged to:
- determine a pressure value of the fluid conveyed in the brake pipe 104;
- determine the pressure value of the fluid in the brake cylinder 106;
- determine that said braking system 100 is damaged or malfunctioning when the relation between the determined pressure value of the fluid conveyed in the brake pipe 104 and the determined pressure value of the fluid in the brake cylinder 106 is not within said predetermined relation pattern.

By determining that said braking system 100 is damaged or malfunctioning, it is generally meant that any one of the components forming part of the braking system (e.g., the braking means, the brake cylinder, the brake pipe, the adjustment means, the pneumatic connection pipes) is damaged or not functioning.

For example, when referring to processing means 114, in any embodiment they may be or comprise at least one among a processor, a microprocessor, a controller, a microcontroller, an FPGA, a PLC, or the like.

Preferably, as observable in figure 1, the first electronic processing means 114 of the rotary electric generator may be arranged to:
- be connected to first pressure measuring means 116 arranged to measure the pressure value of the fluid in said brake cylinder 106;
- be connected to second pressure measuring means 118 arranged to measure the pressure value of the fluid conveyed in the brake pipe 104.

In this case, the first electronic processing means 114 of the rotary electric generator 112 may be arranged to:
- determine the pressure value of the fluid in the brake cylinder 106 as a function of a signal or datum indicative of the pressure value of the fluid in the brake cylinder provided by said first pressure measuring means 116;
- determine the pressure value of the fluid conveyed in the brake pipe 104 as a function of a signal or datum indicative of the pressure value of the fluid conveyed in the brake pipe provided by said second pressure measuring means 118.

In other words, the rotary electric generator 112 of the system may be associated with respective pressure measuring means 116, 118 and autonomously determine the pressure values of the fluid in the brake cylinder 106 and in the brake pipe 104.

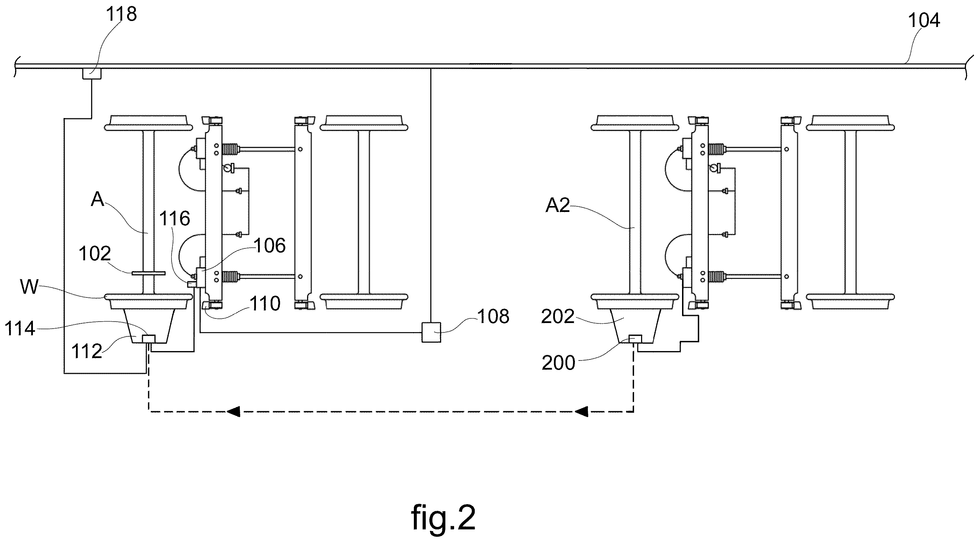

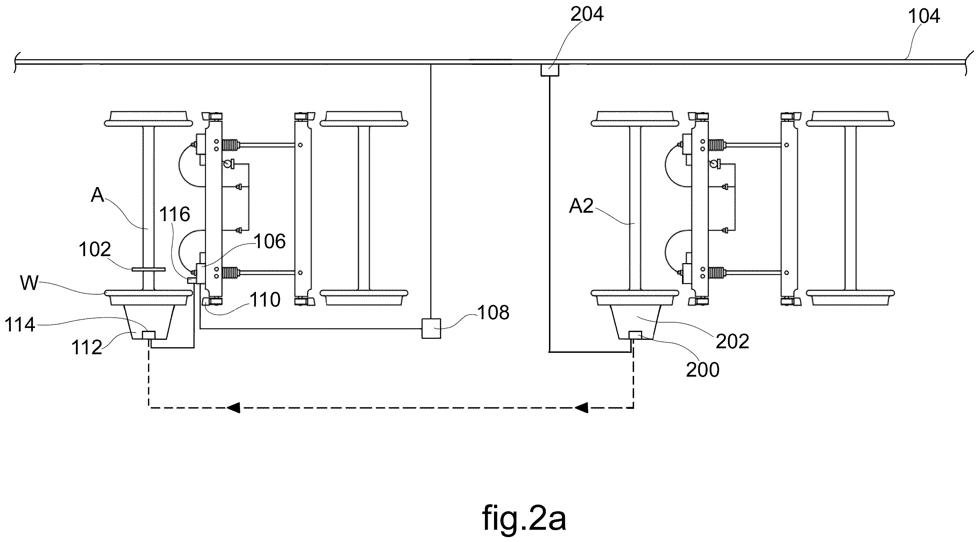

As observable for example in figure 2, preferably, the first electronic processing means 114 may be arranged to receive at least one further pressure value of the fluid in a further brake cylinder of the vehicle from further electronic processing means included in a further rotary electric generator associated with a further axle of the vehicle or at least one further signal or datum indicative of a further pressure value of the fluid in a further brake cylinder (included in the braking system of the vehicle) from further electronic processing means included in a further rotary electric generator associated with a further axle of the vehicle.

The further axle may be included in the same bogie in which the at least one axle associated with the rotary electric generator 112 is included, or the further axle may be included in a different bogie of the vehicle from the bogie in which the at least one axle associated with the rotary electric generator 112 is included.

In this case, the first electronic processing means 114 may also be arranged to determine that said braking system 100 is damaged or malfunctioning when the relation between the determined pressure value of the fluid conveyed in the brake pipe 104 and the received pressure value of the fluid in the further brake cylinder is not within said predetermined relation pattern.

In other words, the rotary electric generator 112 of the verification system may determine the state of the braking system also based on further pressure values in further brake cylinders of the braking system of the vehicle, which are transmitted to it by further rotary electric generators.

In an alternative embodiment, as observable for example in figure 2a, preferably, the electronic processing means 114 of the rotary electric generator may be arranged to be connected to first pressure measuring means 116 arranged to measure the pressure value of the fluid in the brake cylinder. Furthermore, the first electronic processing means 114 of the rotary electric generator 112 may be arranged to determine the pressure value of the fluid in the brake cylinder as a function of a signal or datum indicative of the pressure value of the fluid in the brake cylinder provided by said first pressure measuring means 116. In such case, the first electronic processing means may be arranged to receive, from second electronic processing means 200 of the verification system, a signal or datum indicative of the pressure value of the fluid conveyed in the brake pipe 104. Furthermore, the first electronic processing means 114 of the rotary electric generator 112 may be arranged to determine the pressure value of the fluid conveyed in the brake pipe 104 as a function of the signal or datum indicative of the pressure value of the fluid conveyed in the brake pipe provided by the second electronic processing means 200.

In other words, the rotary electric generator 112 of the verification system may be associated with pressure measuring means and autonomously determine the pressure value of the fluid in the brake cylinder but may receive the pressure value of the fluid in the brake pipe 104 from further electronic processing means 200 included in the vehicle. In this way, it is not necessary for each rotary electric generator 112 to be coupled to further pressure measuring means 118 to determine the pressure value of the fluid in the brake pipe 104. The pressure value of the fluid in the brake pipe 104 may for example be determined in a centralized manner and distributed to all the electronic processing means 114 of the system (for example included in respective rotary electric generators).

In yet a further exemplary embodiment, not illustrated in the figures, the second electronic processing means 200 may be arranged to be connected to second pressure measuring means arranged to measure the pressure value of the fluid conveyed in the brake pipe. In such case, the second pressure measuring means may be arranged to transmit to the second electronic processing means the signal or datum indicative of the pressure value of the fluid conveyed in the brake pipe.

By way of example, with reference to any described embodiment, the pressure measuring means 116, 118 may be or comprise at least one pressure sensor.

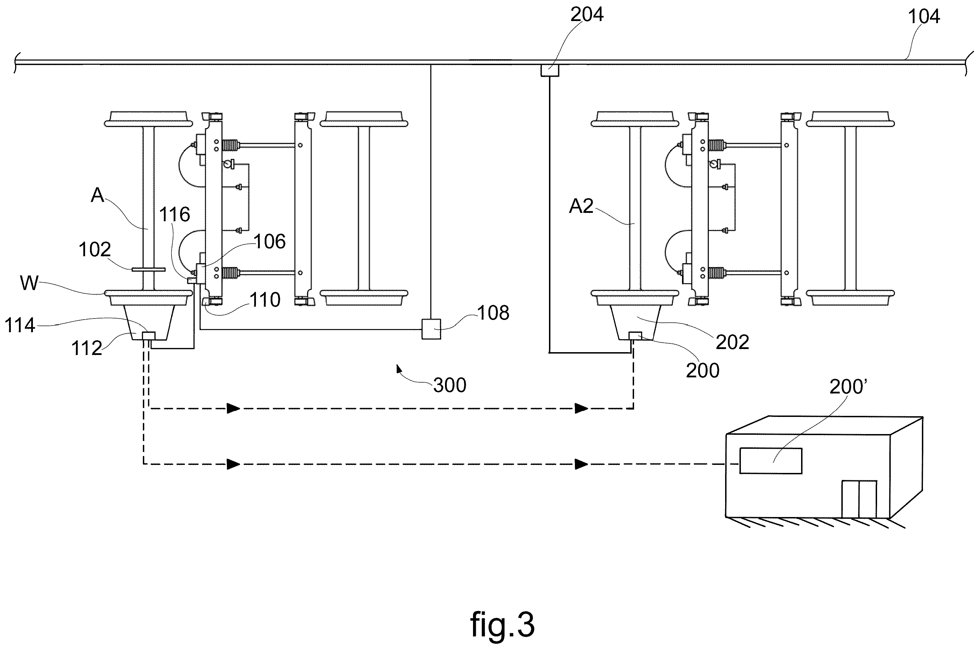

With reference to figure 3, a second embodiment of a verification system 300 of the operation of a braking system for a vehicle, particularly a railway vehicle, is described below.

As observable in figure 3, the vehicle again comprises at least one axle A to which at least one wheel W is coupled and a braking system arranged to apply a braking force to said wheel W or to said axle A or to a braking organ 102 coupled to said wheel W or to said axle A.

The braking system comprises:
- at least one brake pipe 104 arranged to convey a fluid;
- a brake cylinder 106 arranged to contain at least a part of said fluid;
- adjustment means 108 arranged for adjusting the pressure value of the fluid inside the brake cylinder 106 according to the pressure value of the fluid conveyed in the brake pipe 104 and to a predetermined relation pattern between the pressure value of the fluid conveyed in the brake pipe and the pressure value of the fluid inside the brake cylinder;
- braking means 110 arranged to apply said braking force to said at least one wheel W or to said at least one axle A or to said braking organ 102, wherein the intensity of said braking force is a function of the pressure value of the fluid in the brake cylinder 106.

In this second embodiment, the verification system 300 again comprises at least one rotary electric generator 112 arranged to be coupled to said at least one axle A of the vehicle.

Said rotary electric generator 112 comprises first electronic processing means 114 arranged to determine the pressure value of the fluid in the brake cylinder 106.

Furthermore, the verification system 300 comprises second electronic processing means 200.

The aforementioned first electronic processing means 114 of the rotary electric generator 112 are thus arranged to transmit, to the second electronic processing means 200, a signal or datum indicative of the determined pressure value of the fluid in the brake cylinder 106.

Furthermore, the second electronic processing means 200 are arranged to:
- determine the pressure value of the fluid conveyed in the brake pipe 104;
- determine the pressure value of the fluid in the brake cylinder 106 as a function of the signal or datum indicative of the pressure value of the fluid in the brake cylinder 106 received;
- determine that said braking system is damaged or malfunctioning when the relation between the determined pressure value of the fluid conveyed in the brake pipe 104 and the determined pressure value of the fluid in the brake cylinder 106 is not within said predetermined relation pattern.

In other words, the first processing means 114 included in a rotary electric generator of the system are only provided for determining the pressure value of the fluid in the brake cylinder 106 and for transmitting said value to further electronic processing means 200. The verification of the state is delegated to such further processing means 200, which are capable of determining the pressure value of the fluid in the brake pipe 104. In this example, in fact, the first processing means 112 are not aware of the pressure value of the fluid in the brake pipe 104 to be compared with the pressure value of the fluid in the brake cylinder 106 monitored by them.

In an implementation example not illustrated in the figures and relating to the aforementioned second embodiment, the first electronic processing means 114 of the rotary electric generator 112 may be arranged to be connected to first pressure measuring means arranged to measure the pressure value of the fluid in the brake cylinder. In such case, the first pressure measuring means may be arranged to transmit a signal or datum indicative of the pressure value of the fluid in the brake cylinder to said electronic processing means of the rotary electric generator.

Furthermore, the second electronic processing means 200 of the verification system may be arranged to:
- be connected to second pressure measuring means 204 arranged to measure the pressure value of the fluid conveyed in the brake pipe;
- determine the pressure value of the braking fluid conveyed in the brake pipe 104 as a function of a signal or datum indicative of the pressure value of the fluid conveyed in the brake pipe 104 provided by said second pressure measuring means 204.

With reference to any of the previous embodiments that provide for the second electronic processing means 200, said second electronic processing means 200 may be arranged to be installed on said vehicle.

For example, the second electronic processing means 200 may be arranged to be included in a further rotary electric generator associated with a further axle of the vehicle.

With reference to the second embodiment and its examples, preferably, the second electronic processing means 200 may be arranged to be installed remotely with respect to the vehicle. For example, the second electronic processing means 200' may be installed in a remote control station.

With reference to any of the previously described embodiments, the braking system 200 may comprise at least one load valve arranged to regulate the pressure of the fluid exiting said at least one brake cylinder, as a function of the weight of the vehicle on which the rotary electric generator is installed.

In such case, the first electronic processing means of the rotary electric generator may be arranged to be coupled to third pressure measuring means arranged to measure a pressure value of the fluid exiting the load valve.

Preferably, with reference to the embodiments comprising second electronic processing means 200, the first electronic processing means 114 of the rotary electric generator 112 may be arranged to transmit a signal or datum indicative of the pressure value of said fluid received from said third measuring means to said second electronic processing means 200.

In a further aspect, the present invention relates to a pressure measurement system for a braking system of a vehicle, particularly a railway vehicle.

The vehicle again comprises at least one axle to which at least one wheel is coupled and a braking system.

The braking system is arranged to apply a braking force to said wheel or to said axle or to a braking organ coupled to said wheel or to said axle.

Furthermore, the braking system comprises:
- a brake pipe arranged to convey a fluid;
- a brake cylinder arranged to contain at least part of said fluid;
- adjustment means arranged to adjust the pressure value of the fluid inside the brake cylinder as a function of the pressure value of the fluid conveyed in the brake pipe and of a predetermined relation pattern between the pressure value of the fluid conveyed in the brake pipe and the pressure value of the fluid inside the brake cylinder;
- braking means arranged to apply said braking force to said at least one wheel or to said at least one axle or to said braking organ, wherein the intensity of said braking force is a function of the pressure value of the fluid in the brake cylinder.

In this embodiment, the pressure measurement system comprises:
- at least one rotary electric generator arranged to be coupled to said at least one axle of the vehicle and comprising first electronic processing means;
- first pressure measuring means arranged to transmit a signal or datum indicative of a pressure value of said fluid in the brake cylinder to said first electronic processing means of the rotary electric generator.

The first electronic processing means of the rotary electric generator are arranged to determine the pressure value of the fluid in the brake cylinder as a function of the signal or datum indicative of the pressure value of the fluid in the brake cylinder received from said first pressure measuring means.

Preferably, the first electronic processing means of the rotary electric generator may be arranged to transmit, to second electronic processing means of the pressure measurement system, the determined pressure value of the fluid in the brake cylinder or the signal or datum indicative of the pressure value of the fluid in the brake cylinder received from said first pressure measuring means.

Preferably, the first electronic processing means of the rotary electric generator may be arranged to receive, from second pressure measuring means, a signal or datum indicative of a pressure value of said fluid conveyed in the brake pipe of the vehicle.

In such case, the first electronic processing means of the rotary electric generator may be arranged to determine the pressure value of said fluid conveyed in the brake pipe of the vehicle as a function of the signal or datum indicative of a pressure value of said fluid conveyed in the brake pipe of the vehicle received from said second pressure measuring means.

Alternatively, the first electronic processing means of the rotary electric generator may be arranged to transmit, to second electronic processing means of the pressure measurement system, the determined pressure value of said fluid conveyed in the brake pipe of the vehicle or the signal or datum indicative of a pressure value of said fluid conveyed in the brake pipe of the vehicle received from the second pressure measuring means.

Preferably, the first electronic processing means of the rotary electric generator may also be arranged to receive at least one further pressure value of the fluid in a further brake cylinder of the vehicle from further electronic processing means included in a further rotary electric generator associated with a further axle of the vehicle or at least one further signal or datum indicative of a further pressure value of the fluid in a further brake cylinder from further electronic processing means included in a further rotary electric generator associated with a further axle of the vehicle.

Clearly, the various embodiments of a pressure measurement system for a braking system of a vehicle described herein may be used in the various embodiments of a verification system of the operation of a braking system for a vehicle previously described.

In a further aspect, the present invention relates to a vehicle.

In a first embodiment, the vehicle comprises at least one axle to which at least one wheel is coupled and a braking system arranged to apply a braking force to said wheel or to said axle or to a braking organ coupled to said wheel or to said axle.

The braking system in turn comprises:
- at least one brake pipe arranged to convey a fluid;
- a brake cylinder arranged to contain at least part of said fluid;
- adjustment means arranged to adjust the pressure value of the fluid inside the brake cylinder as a function of the pressure value of the fluid conveyed in the brake pipe and of a predetermined relation pattern between the pressure value of the fluid conveyed in the brake pipe and the pressure value of the fluid inside the brake cylinder;
- braking means arranged to apply said braking force to said at least one wheel or to said at least one axle or to said braking organ, wherein the intensity of said braking force is a function of the pressure value of the fluid in the brake cylinder.

In this first embodiment, the vehicle comprises a verification system of the operation of a braking system for a vehicle according to any of the embodiments previously described.

In a further embodiment, the vehicle again comprises at least one axle to which at least one wheel is coupled and a braking system arranged to apply a braking force to said wheel or to said axle or to a braking organ coupled to said wheel or to said axle (and all the elements of the braking system already described for the previous embodiment).

In this embodiment, however, the vehicle comprises a pressure measurement system for a braking system of a vehicle according to any of the previously described embodiments.

Preferably, the vehicle may be a railway vehicle, preferably, a freight wagon.

For example, in the present disclosure, the vehicle may be a railway vehicle or a railway convoy (group of vehicles connected to one another) comprising a plurality of railway vehicles. For example, a vehicle may be a locomotive or a wagon, and a route/track may comprise rails (rolling surface) on which the wheels of the locomotive roll. However, the embodiments described herein are not to be construed as limited to rail vehicles. For example, the vehicle may be an automobile, a truck (for example, a highway semi-trailer, a mining truck, a logging truck or the like), or the like, and the route may be a road or a path.

The advantage achieved is therefore that of having provided solutions usable also on vehicles not provided with electric power supply systems and capable of monitoring the operation of pneumatic systems of such vehicles.

Various aspects and embodiments of a verification system of the operation of a braking system for a vehicle and of a pressure measurement system for a braking system of a vehicle according to the invention have been described. It is intended that each embodiment may be combined with any other embodiment. Furthermore, the invention is not limited to the described embodiments, but may be varied within the scope defined by the appended claims.

## Claims

1. A verification system (100) of the operation of a braking system for a vehicle, particularly a railway vehicle, wherein said vehicle comprises at least one axle (A) to which at least one wheel (W) is coupled and a braking system arranged to apply a braking force to said wheel (W) or to said axle (A) or to a braking organ (102) coupled to said wheel (W) or to said axle (A);
the braking system comprising:
- at least one brake pipe (104) arranged to convey a fluid;
- a brake cylinder (106) arranged to contain at least a part of said fluid;
- adjustment means (108) arranged for adjusting the pressure value of the fluid in the brake cylinder (106) according to the pressure value of the fluid conveyed in the brake pipe (104) and to a pre-determined relation pattern between the pressure value of the fluid conveyed in the brake pipe and the pressure value of the fluid inside the brake cylinder;
- braking means (110) arranged for applying said braking force on said at least one wheel (W) or on said at least one axle (A) or on said braking organ (102), wherein the intensity of said braking force is a function of the pressure value of the fluid in the brake cylinder (106);
the verification system being **characterized by** comprising at least one rotary electric generator (112) arranged to be coupled to said at least one axle (A) of said vehicle;
said rotary electric generator (112) comprising first electronic processing means (114) arranged for:
- determining a pressure value of the fluid conveyed in the brake pipe (104);
- determine the pressure value of the fluid in the brake cylinder (106);
- determining that said braking system is damaged or malfunctioning when the relation between the determined pressure value of the fluid conveyed in the brake pipe (104) and the determined pressure value of the fluid in the brake cylinder (106) is not within said predetermined relation pattern.

2. Verification system according to claim 1, wherein said first electronic processing means (114) of the rotary electric generator (112) are arranged to:
- be connected to first pressure measuring means (116) arranged to measure the pressure value of the fluid in said brake cylinder (114);
- being connected to second pressure measuring means (118) arranged to measure the pressure value of the fluid conveyed in said brake pipe (104);
wherein said first electronic processing means (114) of said rotary electric generator (112) are arranged for:
- determining the pressure value of the fluid in the brake cylinder (106) as a function of a signal or datum indicative of the pressure value of the fluid in the brake cylinder provided by said first pressure measuring means (116);
- determining the pressure value of the fluid conveyed in the brake pipe (104) as a function of a signal or datum indicative of the pressure value of the fluid conveyed in the brake pipe provided by said second pressure measuring means (118).

3. Verification system according to claim 1 or 2, wherein said first electronic processing means are arranged to:
- receive at least one further pressure value of the fluid in a further brake cylinder of the vehicle from further electronic processing means included in a further rotary electric generator associated with a further axle of the vehicle, or at least one further signal or datum indicative of a further pressure value of the fluid in a further brake cylinder from further electronic processing means included in a further rotary electric generator associated with a further axle of the vehicle;
- determine that said braking system is damaged or malfunctioning when the relationship between the determined pressure value of the fluid in the brake pipe (104) and the received pressure value of the fluid in the further brake cylinder is not within said predetermined relation pattern.

4. Verification system according to claim 1, wherein said electronic processing means (112) of the rotary electric generator are arranged to:
- be connected to first pressure measuring means (116) arranged to measure the pressure value of the fluid in the brake cylinder;
wherein said first electronic processing means of the rotary electric generator are arranged for determining the pressure value of the fluid in the brake cylinder as a function of a signal or datum indicative of the pressure value of the fluid in the brake cylinder provided by said first pressure measuring means;
wherein said first electronic processing means are arranged to receive, from second electronic processing means of the verification system, a signal or datum indicative of the pressure value of the fluid conveyed in the brake pipe;
wherein said first electronic processing means of the rotary electric generator are arranged to determine the pressure value of the fluid conveyed in the brake pipe as a function of the signal or datum indicative of the pressure value of the fluid conveyed in the brake pipe provided by the second electronic processing means.

5. Verification system (300) of the operation of a braking system for a vehicle, particularly a railway vehicle, wherein said vehicle comprises at least one axle (A) to which at least one wheel (W) is coupled, and a braking system arranged to apply a braking force to said wheel (W) or to said axle (A) or to a braking organ (102) coupled to said wheel (W) or to said axle (A);
the braking system comprising:
- at least one brake pipe (104) arranged to convey a fluid;
- a brake cylinder (106) arranged to contain at least a part of said fluid;
- adjustment means (108) arranged for adjusting the pressure value of the fluid in the brake cylinder (106) according to the pressure value of the fluid conveyed in the brake pipe (104) and to a predetermined relation pattern between the pressure value of the fluid conveyed in the brake pipe and the pressure value of the fluid inside the brake cylinder;
- braking means (110) arranged for applying said braking force on said at least one wheel (W) or on said at least one axle (A) or on said braking organ (102), wherein the intensity of said braking force is a function of the pressure value of the fluid in the brake cylinder (104);
the verification system being **characterized by** comprising at least one rotary electric generator (112) arranged to be coupled to said at least one axle (A) of said vehicle;
said rotary electric generator (112) comprising first electronic processing means (114) arranged for:
- determining the pressure value of the fluid in the brake cylinder (106);
said verification system further comprising second electronic processing means (200, 200');
said first electronic processing means (112) of the rotary electric generator being arranged for:
- transmitting to said second electronic processing means (200, 200'), a signal or datum indicative of the determined pressure value of the fluid in the brake cylinder;
said second electronic processing means (200, 200') being arranged to:
- determine the pressure value of the fluid conveyed in the brake pipe (104);
- determine the pressure value of the fluid in the brake cylinder (104) as a function of the received signal or datum indicative of the pressure value of the fluid in the brake cylinder;
- determine that said braking system is dam-aged or malfunctioning when the relationship be-tween the determined pressure value of the fluid conveyed in the brake pipe (104) and the determined pressure value of the fluid in the brake cylinder (106) is not comprised in said predetermined relation pattern.

6. Verification system according to claim 4 or 5, wherein said second electronic processing means (200) are arranged to be installed on said vehicle.

7. Verification system according to claim 6, wherein said second electronic processing means (200) are arranged to be included in a further rotary electric generator (202) associated with a further axle (A2) of said vehicle.

8. Verification system according to claim 5, wherein said second electronic processing means (200') are arranged to be installed remote from said vehicle.

9. Verification system according to claim 8, wherein said second electronic processing means (200') are installed in a remote-control station.

10. Verification system according to any one of the preceding claims, wherein said braking system comprises at least one load valve arranged to regulate the pressure of the fluid exiting said at least one brake cylinder according to the weight of the vehicle on which said rotary electric generator is installed;
wherein said first electronic processing means (114) of said rotary electric generator (112) are arranged to be coupled to third pressure measuring means arranged to measure a pressure value of the fluid exiting said load valve.

11. Verification system according to claim 10, when dependent on any one of claims 4 to 9, wherein said first electronic processing means (114) of the rotary electric generator (112) are arranged to transmit a signal or datum indicative of the pressure value of said fluid received from said third measuring means to said second electronic processing means (200, 200').

12. A pressure measurement system for a braking system of a vehicle, particularly a railway vehicle, wherein said vehicle comprises at least one axle to which at least one wheel is coupled and a braking system arranged to apply a braking force to said wheel or axle or to a braking organ coupled to said wheel or axle;
the braking system comprising:
- at least one brake pipe arranged to convey a fluid;
- a brake cylinder arranged to contain at least part of said fluid;
- adjustment means arranged for adjusting the pressure value of the fluid in the brake cylinder according to the pressure value of the fluid conveyed in the brake pipe and to a predetermined relation pattern between the pressure value of the fluid conveyed in the brake pipe and the pressure value of the fluid in the brake cylinder;
- braking means arranged to apply said braking force to said at least one wheel or to said at least one axle or to said braking organ, wherein the intensity of said braking force is a function of the pressure value of the fluid in the brake cylinder;
the pressure measurement system being **characterized by** comprising:
- at least one rotary electric generator arranged to be coupled to said at least one axle of the vehicle and comprising first electronic processing means;
- first pressure measuring means arranged for transmitting a signal or datum indicative of a pressure value of said fluid in said brake cylinder to said first electronic processing means of said rotary electric generator;
wherein said first electronic processing means of the rotary electric generator are arranged for determining the pressure value of the fluid in the brake cylinder as a function of the signal or datum indicative of the pressure value of the fluid in the brake cylinder received from said first pressure measuring means.

13. Measuring system according to claim 12, wherein said first electronic processing means of the rotary electric generator are arranged to transmit, to second electronic processing means of the pressure measuring system, the determined pressure value of the fluid in the brake cylinder or the signal or datum indicative of the pressure value of the fluid in the brake cylinder received from said first pressure measuring means.

14. Measuring system according to claim 12 or 13, wherein said first electronic processing means of the rotary electric generator are arranged to receive, from said second pressure measuring means, a signal or datum indicative of a pressure value of said fluid conveyed in the brake pipe of the vehicle;
wherein said first electronic processing means of the rotary electric generator are arranged to determine the pressure value of said fluid conveyed in the brake pipe of the vehicle as a function of the signal or datum indicative of a pressure value of said fluid conveyed in the brake pipe of the vehicle received from said second pressure measuring means.

15. Measuring system according to claim 13 or 14, wherein said first electronic processing means of the rotary electric generator are arranged to transmit, to second electronic processing means of the pressure measuring system, the determined pressure value of said fluid conveyed in the brake pipe of the vehicle or the signal or datum indicative of a pressure value of said fluid conveyed in the brake pipe of the vehicle received from said second pressure measuring means.

16. Measuring system according to any one of claims 13 to 15, wherein said first electronic pro-cessing means of the rotary electric generator are arranged to receive at least one further pressure value of the fluid in a further brake cylinder of the vehicle from further electronic processing means included in a further rotary electric generator associated with a further axle of the vehicle or at least one further signal or datum indicative of a further pressure value of the fluid in a further brake cylinder from further electronic processing means included in a further rotary electric generator associated with a further axle of the vehicle.

17. Vehicle comprising
- at least one axle to which at least one wheel is coupled;
- a braking system arranged to apply a braking force to said wheel or axle or to a braking organ coupled to said wheel or axle;
the braking system comprising:
- at least one brake pipe arranged to convey a fluid;
- a brake cylinder arranged to contain at least part of said fluid;
- adjustment means arranged for adjusting the pressure value of the fluid in the brake cylinder according to the pressure value of the fluid conveyed in the brake pipe and to a predetermined relation pattern between the pressure value of the fluid conveyed in the brake pipe and the pressure value of the fluid in the brake cylinder;
- braking means of arranged to apply said braking force to said at least one wheel or said at least one axle or said braking organ, the in-tensity of said braking force being a function of the pressure value of the fluid in the brake cylinder;
the vehicle being **characterized by** comprising a verification system of the operation of a braking system for a vehicle according to any one of claims 1 to 11.

18. Vehicle comprising:
- at least one axle to which at least one wheel is coupled;
- a braking system arranged to apply a braking force to said wheel or said axle or to a braking organ coupled to said wheel or said axle;
the braking system comprising:
- at least one brake pipe arranged to convey a fluid;
- a brake cylinder arranged to contain at least part of said fluid;
- adjustment means arranged for adjusting the pressure value of the fluid inside the brake cylinder according to the pressure value of the fluid conveyed in the brake pipe and to a predetermined relation pattern between the pressure value of the fluid conveyed in the brake pipe and the pressure value of the fluid in the brake cylinder
- braking means arranged to apply said braking force to said at least one wheel or said at least one axle or said braking organ, wherein the intensity of said braking force is a function of the value of the pressure of the fluid in the brake cylinder;
the vehicle being **characterized by** comprising a pressure measuring system for a braking system of a vehicle according to any one of claims 12 to 16.

19. Vehicle according to claim 17 or 18, wherein said vehicle is a railway vehicle, preferably, a freight wagon.
